Europäisches Patentamt

European Patent Office

Office européen des brevets

(11) Publication number: **0 035 287**
**B1**

# EUROPEAN PATENT SPECIFICATION

(45) Date of publication of patent specification: **19.06.85**

(21) Application number: **81200101.4**

(22) Date of filing: **27.03.79**

(60) Publication number of the earlier application in accordance with Art. 76 EPC: **0 004 476**

(51) Int. Cl.⁴: **G 11 B 7/08,** G 11 B 7/00, H 04 N 5/76

(54) **Signal correction system and method.**

(30) Priority: **27.03.78 US 890670**

(43) Date of publication of application:
**09.09.81 Bulletin 81/36**

(45) Publication of the grant of the patent:
**19.06.85 Bulletin 85/25**

(84) Designated Contracting States:
**BE CH DE FR GB IT NL SE**

(56) References cited:
**DE-A-2 521 821**
**US-A-3 965 482**
**US-A-3 967 311**
**US-A-4 037 252**

(73) Proprietor: **DISCOVISION ASSOCIATES**
**3300 Hyland Avenue**
**Costa Mesa California 92626 (US)**

(72) Inventor: **Ceshkovsky, Ludwig**
**10435, Morning Glory Avenue**
**Fountain Valley California (US)**
Inventor: **Dakin, Wayne Ray**
**816, Camino Real**
**20 Redondo Beach California (US)**

(74) Representative: **Arthur, George Fitzgerald et al**
**KILBURN & STRODE 30, John Street**
**London WC1N 2DD (GB)**

Courier Press, Leamington Spa, England.

## Description

This invention relates to signal correction systems and methods for use in a player apparatus for recovering information recorded on a video disc or other information bearing surface, which recorded information occupies a frequency spectrum and includes a reference signal of prescribed amplitude in a first portion of the frequency spectrum, the player apparatus including an optical system for directing a modulated beam of radiation containing said information from a selected location on the information bearing surface to a signal recovery system for producing a corresponding electrical signal.

The present application is one of a series of related cases having some disclosure in common; all are concerned with aspects of reading optical records. The cases are EP—A—4 476 (the parent case) and divisional applications EP—A—35 287, EP—A—35 288, EP—A—34 803, EP—A—36 222. EP—A—4 476 is concerned with correcting time base errors by comparing the phase of a signal from an optical disc with a reference signal and moving the impingement location of the readout beam on the disc in a direction along the track to counteract the errors; the result of the comparison is altered in response to the radial location of the beam. As explained later, the present application EP—A—35 287 is concerned with correction for the non-uniform gain of the optical system used during reading. EP—A—35 288 is concerned with track changing, a track following loop being disconnected before a jump signal is applied to the beam steering means and a compensation signal being applied to that means to decelerate the beam as it approaches the desired track; the track following loop is reconnected before that track is reached, so as to co-operate with the compensation signal. EP—A—35 803 concerns a disc rotation spindle servo system having a spindle tachometer and a reference frequency source; the tachometer has two independent tachometer elements indicating the spindle rotation, two error signals being produced by comparing the signals from these elements with the reference frequency and the spindle motor being controlled in response to the sum of those error signals. EP—A—36 222 is concerned with focus acquisition in a focus system using both focus and information detectors; it imposes a relatively high frequency oscillation on the movement of the focusing lens when focus is being sought.

An object of the present invention is to reduce the effects of the nonuniform gain characteristics of the optical system on the modulated beam, and according to the invention this is achieved by player apparatus which is characterised in that the resolution power of the optical system (2) causes an error in the amplitude of the recovered reference signal, and also causes non-uniform amplitude errors in signals recovered over a second portion of the frequency spectrum excluding the first portion, the error caused in the amplitude of the recovered reference signal having a predetermined relationship to the errors caused in the amplitudes of the signals recovered over the second portion, and which is further characterised by a signal correction system including reference signal separator means for separating the reference signal from the remainder of the electrical signal, amplitude detection means for comparing the amplitude of the reference signal with a predetermined reference amplitude, and generating a control signal indicative of the difference between the amplitudes and hence of the errors in signals recovered over the second portion, and frequency selective variable gain amplifier means responsive to said control signal for correcting the amplitude of the electrical signal over the second portion.

The invention also includes a corresponding method of signal correction in such a player apparatus.

The invention may be carried into practice in various ways, and one embodiment will be described by way of example with reference to the accompanying drawings in which:—

FIGURE 1 is identical with Figure 1 of the parent application and is a generalised block diagram of a video disc player;

FIGURE 2 is a schematic diagram of the optical system employed in the video disc player shown in Figure 1; and is identical with Figure 2 of the parent application;

FIGURE 3 is a generalised block diagram of the FM processing subsystem shown at 32 (and marked Figure 14) in Figure 1;

FIGURE 4 is a block diagram of the FM corrector circuit utilised in the FM processing subsystem shown in Figure 3; and

FIGURE 5 shows a plurality of waveforms and one transfer function utilised in explaining the operation of the FM corrector circuit shown in Figure 4.

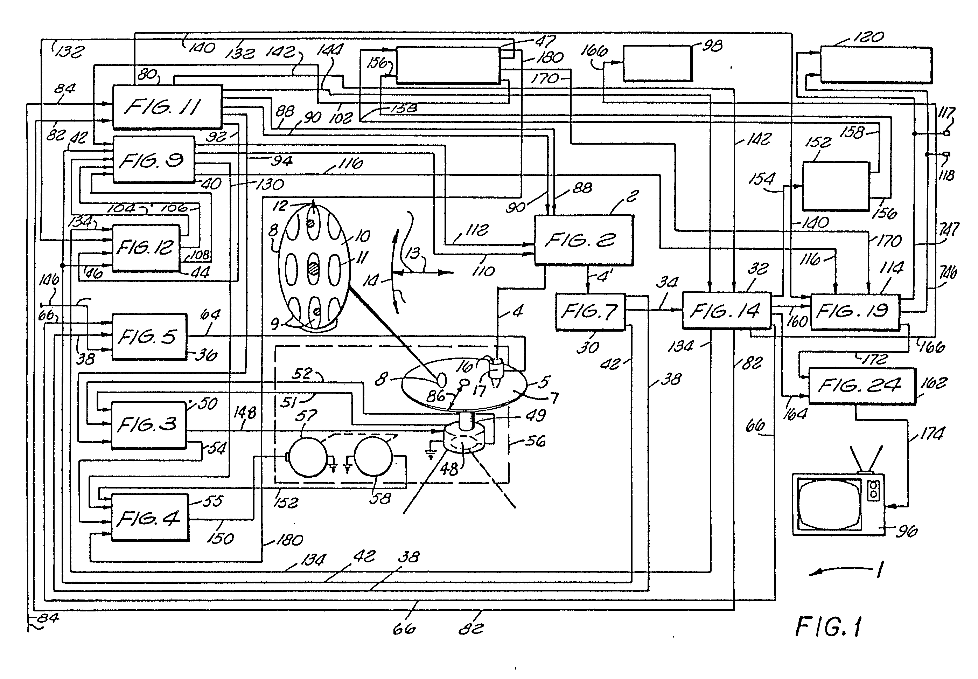

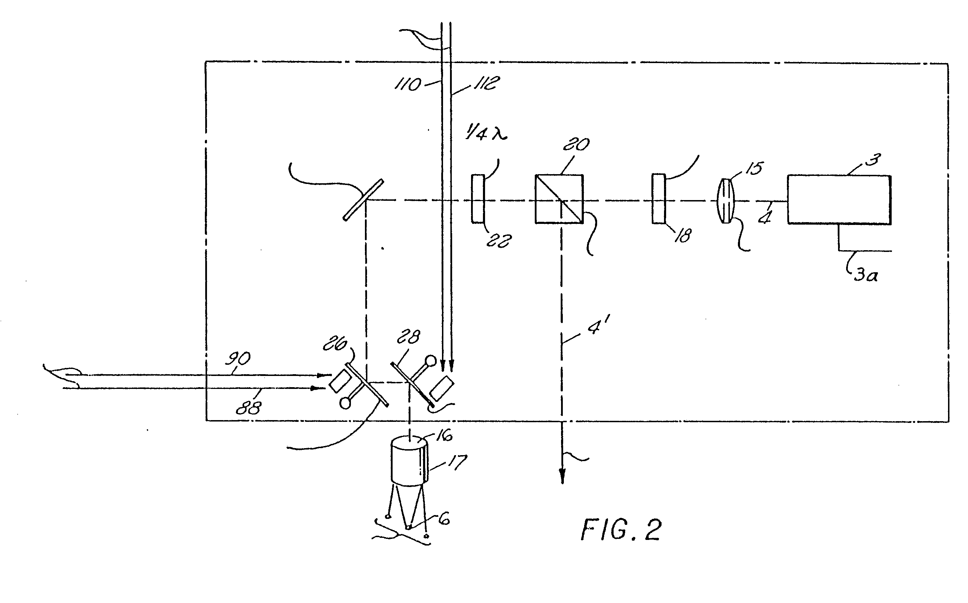

Referring to Figure 1, there is shown a schematic block diagram of a video disc player system indicated generally at 1. The player 1 employs an optical system indicated at 2 and shown in greater detail in Figure 2.

Referring collectively to Figures 1 and 2, the optical system 2 includes a read laser 3 employed for generating a read beam 4 which is used for reading a frequency modulated encoded signal stored on a video disc 5. The read beam 4 is polarised in a predetermined direction. The read beam 4 is directed to the video disc 5 by the optical system 2. An additional function of the optical system 2 is to focus the light beam down to a spot 6 at its point of impingement with the video disc 5.

A portion of an information bearing surface 7 of the video disc 5 is shown enlarged within a circle 8. A plurality of information tracks 9 are formed on the video disc 5. Each track is formed with successive light reflective regions 10 and light non-reflective regions 11. The direction of reading is indicated by an arrow 12. The read beam 4 has two degrees of movement, the first of which is in the radial direction as indicated by a double headed arrow 13; the second of which is the tangential direction as indicated by a double headed arrow 14. The double heads of each of the arrows 13 and 14 indicate that the read beam 4 can move in both directions in each of the radial and tangential directions.

Referring to Figure 2, the optical system comprises a lens 15 employed for shaping the beam to fully fill an entrance aperture 16 of a microscopic objective lens 17. The objective lens is employed for forming the spot 6 of light at its points of impingement with the video disc 5. Improved results have been found when the entrance aperture 16 is overfilled by the reading beam 4. This results in maximum light intensity at the spot 6.

For further details of the apparatus of Figure 1, reference may be made to publication No. EP—A—4476.

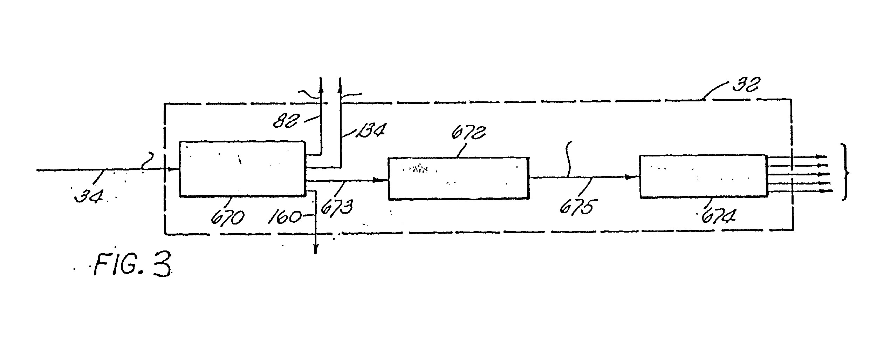

The present invention is concerned with the FM processing subsystem 32 employed in the video disc player 1. The block diagram is Figure 3 of the present application. The frequency modulated video signal recovered from the disc 5 forms the input to the FM processing subsystem 32 over the line 34. The frequency modulated video signal is applied to an FM distribution amplifier 670. The distribution amplifier provides three equal unloaded representations of the received signal. The first output signal from the distribution amplifier is applied to an FM corrector circuit 672 over a line 673. The FM corrector circuit 672 operates to provide variable gain amplification to the received frequency modulated video signal to compensate for the mean transfer function of the lens 17 as it reads the frequency modulated video signal from the disc. The lens 17 is operating close to its absolute resolving power and as a result, recovers the frequency modulated video signal with different amplitudes corresponding to different frequencies.

The output from the FM corrector circuit 672 is applied to an FM detector 674 over a line 675. The FM detector generates discriminated video for application to the remaining circuits requiring such discriminated video in the video disc player. A second output signal FM1 from the distribution amplifier 670 is applied to the tangential servo subsystems 80 over the line 82. A further output signal FM2 from the distribution amplifier 670 is applied to the stop motion subsystem 44 over the line 134.

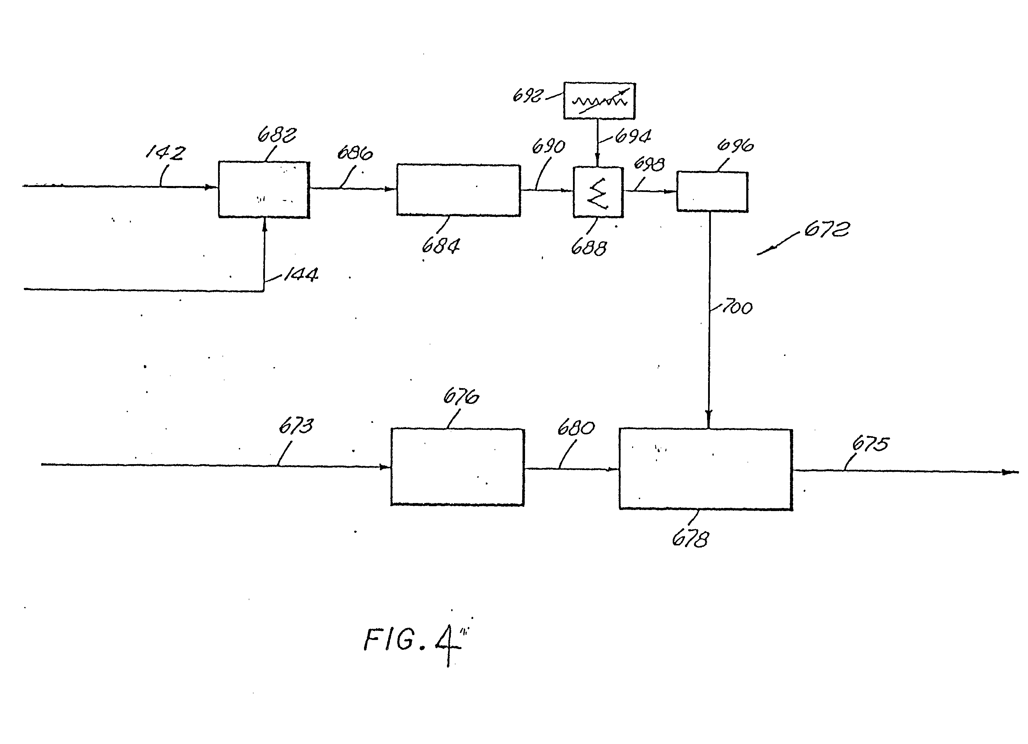

Referring to Figure 4, there is shown a more detailed block diagram of the FM corrector 672 shown in Figure 3. The FM video signal from the amplifier 670 is applied to an audio subcarrier trap circuit 676 over the line 673. The function of the subcarrier trap circuit 676 is to remove all audio components from the frequency modulated video signal prior to application to a frequency selective variable gain amplifier 678 over a line 680.

The control signals for operating the amplifier 678 include one from a first burst gate detector 682 having a plurality of input signals. A first input signal is the chroma portion of the FM video signal as applied over a line 142. The second input signal to the burst gate 682 is the burst gate enable signal from the tangential servo subsystem 80 over the line 144. The function of the burst gate 682 is to gate into an amplitude detector 684 over a line 686 that portion of the chroma signal corresponding to the colour burst signal. The output from the amplitude detector 684 is applied to a summation circuit 688 over a line 690. A second input to the summation circuit 688 is from a variable burst level adjust potentiometer 692 over a line 694. The function of the amplitude detector 684 is to determine the first order lower chroma side band vector and apply it as a current representation to the summation circuit 688. The burst level adjust signal on the line 694 from the potentiometer 692 operates in conjunction with this vector to develop a control signal to an amplifier 696. The output from the summation circuit is applied to the amplifier 696 over the line 698. The output from the amplifier 696 is a control voltage for application to the amplifier 678 over a line 700.

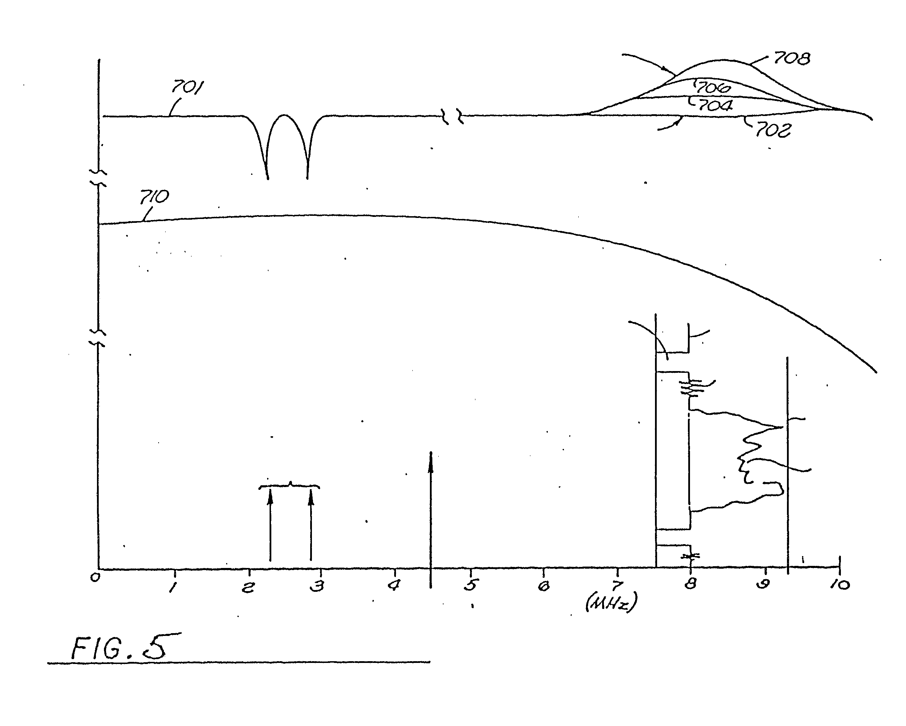

Referring to Figure 5, there is shown a number of waveforms helpful in understanding the operation of the FM corrector shown in Figure 4. The waveform represented by the line 701 represents the FM corrector transfer function in generating control voltages for application to the amplifier 678 over the line 700. The line 701 includes four sections of the curve indicated generally at 702, 704, 706 and 708. These section 702, 704, 706 and 708 represent the various control voltages generated in response to the comparison with the instantaneous colour burst signal amplitude and the pre-set level.

Line 710 represents the mean transfer function of the objective lens 17 employed for reading the successive light reflective regions 10 and light nonreflective regions 11. It can be seen upon inspection that the gain versus frequency response of the lens falls off as the lens reads the frequency modulated representations of the video signal. Referring to the remaining portion of Figure 5, there is shown the frequency spectrum of the frequency modulated signals as read from the video disc. This indicates that the video signals are located principally between the 7.5 and 9.2 megahertz region at which the frequency response of the lens shown on line 710 is showing a significant decrease. Accordingly, the control voltage from the amplifier 696 is variable in nature to compensate for the frequency response of the lens. In this manner the effective frequency response of the lens is brought into a normalized or uniform region.

The FM corrector subsystem functions to adjust the FM video signal received from the disc such that all recovered FM signals over the entire frequency spectra of the recovered FM signals are all amplified to a level, relative one to the other to reacquire their substantially identical relationships one to the other as they existed during the recording process.

The microscopic lens 17 employed in the video disc player 1 has a mean transfer characteristic such that it attenuates the higher frequencies more than it attenuates the lower frequencies. In this sense, the lens 17 acts like a low pass filter. The function of the FM corrector is to process the received FM video signal such that the ratio of the luminance signal to the chrominance signal is maintained regardless of the position on the disc from which the FM video signal is recovered. This is achieved by measuring the colour burst signal in the lower chroma side band and storing a representation of its amplitude. This lower chroma side band signal functions as a reference amplitude.

The FM video signal is recovered from the video disc as previously described. The chrominance signal is removed from the FM video signal and the burst gate enable signal gates the colour burst signal present on each line of FM video information into a comparison operation. The comparison operation effectively operates to sense the difference between the actual amplitude of the colour burst signal recovered from the video disc surface and a reference amplitude. The reference amplitude has been adjusted to the correct level and the comparison process indicates an error signal between the recovered amplitude of the colour burst signal and the reference colour burst signal represented by the difference in amplitude between the two signals. The error signal generated in this comparison operation can be identified as the colour burst error amplitude signal. This colour-burst error amplitude signal is employed for adjusting the gain of the variable gain amplifier 678 to amplify the signal presently being recovered from the video disc 5 to amplify the chrominance signal more than the luminance signal. This variable amplification provides a variable gain over the frequency spectrum. The higher frequencies are amplified more than the lower frequencies. Since the chrominance signals are at the higher frequencies, they are amplified more than the luminance signals. This variable amplification of signals results in effectively maintaining the correct ratio of the luminance signal to the chrominance signal as the reading process moves radially from the outer periphery to the inner periphery. As previously mentioned, the indicia representing the FM video signal on the video disc 5 change in size from the outer periphery to the inner periphery. At the inner periphery they are smaller than at the outer periphery. The smallest size indicia are at the absolute resolution power of the lens and the lens recovers the FM signal represented by this smallest size indicia at a lower amplitude value than the lower frequency members which are larger in size and spaced farther apart.

In a preferred mode of operation, the audio signals contained in the FM video signal are removed at 676 from the FM video signal before application to the variable gain amplifier. The audio information is contained around a number of FM subcarrier signals and it has been found by experience that the removal of these FM subcarrier audio signals provides enhanced correction of the remaining video FM signal in the variable gain amplifier.

In an alternative mode of operation the frequency band width applied to the variable gain amplifier is that band width which is affected by the mean transfer function of the objective lens 17. More specifically, when a portion of the total FM recovered from the video disc lies in a range not affected by the mean transfer function, then this portion of the total waveform can be removed from that portion of the FM signal applied to the variable gain amplifier. In this manner, the operation of the variable gain amplifier is not complicated by signals having a frequency which need not be corrected because of the resolution characteristics of the objective lens 17.

The FM corrector functions to sense the absolute value of a signal recovered from the video disc, which signal is known to suffer an amplitude change due to the resolution power of the objective lens 17 used in the video disc signal. This known signal is then compared against a reference signal indicating the amplitude that the known signal should have. The output from the comparison is an indication of the additional amplification required for all of the signals lying in the frequency spectra affected by the resolving power of the lens. The amplifier is designed to provide a variable gain over the frequency spectra. Furthermore, the variable gain is further selective based on the amplitude of the error signal. Stated another way, for a first error signal detected between the signal recovered from the disc and the reference frequency, the variable gain amplifier is operated at a first level of variable amplification over the entire frequency range of the affected signal. For a second level of error signal, the gain across the frequency spectra is adjusted a different amount when compared for the first colour burst error amplitude signal.

## Claims

1. Player apparatus for recovering information recorded on an information bearing surface, which recorded information occupies a frequency spectrum and includes a reference signal of prescribed amplitude in a first portion of the frequency spectrum, the player apparatus (1) including an optical system (2) for directing a modulated beam (4') of radiation containing information from a selected location on the information bearing surface (7) to a signal recovery system (30) for producing a corresponding electrical signal, characterised in that the resolution power of the optical system (2) causes an error in the amplitude of the recovered reference signal, and also causes non-uniform amplitude errors in signals recovered over a second portion of the frequency spectrum excluding the first portion, the error caused in the amplitude of the recovered reference signal having a predetermined relationship to the errors caused in the amplitudes of the signals recovered over the second portion, and further, characterised by a signal correction system (32) including reference signal separator means (682) for separating the reference signal from the remainder of the electrical signal, amplitude detection means (684) for comparing the amplitude of the reference signal with a predetermined reference amplitude, and generating a control signal indicative of the difference between the amplitudes and hence of the errors in signals recovered over the second portion, and frequency selective variable gain amplifier means (678) responsive to said control signal for correcting the amplitude of the electrical signal over the second portion, whereby the effects of the nonuniform gain characteristic of the optical system on the modulated beam are reduced.

2. Apparatus as claimed in Claim 1 wherein the amplifier means (678) corrects the amplitude of the electrical signal substantially only over the second portion of the frequency spectrum.

3. Apparatus as claimed in Claim 1 or Claim 2 wherein the information includes a plurality of reference signals of prescribed amplitude in the first portion of the frequency spectrum and the separator means (682) separates one of the reference signals occupying a relatively narrow frequency spectrum compared to the second portion of the frequency spectrum.

4. Apparatus as claimed in any preceding claim wherein the information is a frequence modulated video signal having a chrominance subcarrier signal with periodic chrominance bursts, the reference signal separator means separate the periodic chrominance bursts from the remainder of the video signal, and the amplitude detection means compares the actual amplitude of the separated chrominance bursts with the predetermined reference amplitude.

5. Apparatus as claimed in Claim 4 wherein the frequency modulated video signal includes a video luminance signal predominantly in the first portion of the frequency spectrum, and the chrominance signal is predominantly in the second portion of the frequency spectrum, with first order lower chrominance sideband signals in said first portion.

6. Apparatus as claimed in Claim 5 wherein the frequency modulated video signal is recorded in tangential tracks on a disc (5) and the nonuniform gain characteristic of the optical system is a function of the radial location on the disc from which the modulated signal is directed to the signal recovery system.

7. Apparatus as claimed in Claim 6, wherein the optical system has a means for focussing a beam of radiation, which includes an objective lens having a limited resolving power that decreases the spectral response of the signal recovery system as the signals are recovered from tracks of decreasing radius.

8. A method of signal correction for use in a player apparatus for recovering information recorded on an information bearing surface, which recorded information occupies a frequency spectrum and includes a reference signal of prescribed amplitude in a first portion of the frequency spectrum, the player apparatus (1) including an optical system (2) for directing a modulated beam (4') of radiation containing the information from a selected location on the information bearing surface to a signal recovery system (30) for producing a corresponding electrical signal, characterised in that the resolution power of the optical system (2) causes an error in the amplitude of the recovered reference signal, and also causes nonuniform amplitude errors in signals recovered over a second portion of the frequency spectrum excluding the first portion, the error caused in the amplitude of the recovered reference signal having a predetermined relationship to the errors caused in the amplitudes of the signals recovered over the second portion, and further characterised by the steps of separating the reference signal from the remainder of the electrical signal, comparing the amplitude of the reference signal with a predetermined reference amplitude and adjusting the amplitude of the electrical signal over the second portion of the frequency spectrum as a function of the difference in amplitude between the reference signal and the predetermined reference amplitude, whereby the effects of the nonuniform gain characteristics of the optical system on the modulated beam are reduced.

**Revendications**

1. Dispositif de lecture pour restituer une information enregistrée sur une surface portant l'information, laquelle information enregistrée occupe un spectre de fréquence et comprend un signal de référence d'amplitude prescrite dans une première partie du spectre de fréquence, le dispositif de lecture (1) comprenant un système optique (2) pour diriger un faisceau modulé (4') de rayonnement contenant une information d'un emplacement choisi sur la surface portant l'information (7) à un système de reproduction du signal (30) pour produire un signal électrique correspondant, caractérisé en ce que la puissance de résolution du système optique (2) provoque une erreur dans l'amplitude du signal de référence reproduit et provoque également des erreurs d'amplitude non uniforme dans les signaux reproduits sur une seconde partie du spectre de fréquence excluant la première partie, l'erreur provoquée dans l'amplitude du signal de référence reproduit ayant une relation prédéterminée par rapport aux erreurs provoquées dans les amplitudes des signaux reproduits sur la seconde partie, et également caractérisé par un système de correction de signal (32) comprenant un moyen séparateur du signal de référence (682) pour séparer le signal de référence du reste du signal électrique, un moyen de détection d'amplitude (684) pour comparer l'amplitude de signal de référence à une amplitude de référence prédéterminée, et produisant un signal de commande représentatif de la différence entre les amplitudes et, de ce fait, des erreurs dans les signaux reproduits sur la seconde partie, et un moyen amplificateur à gain variable sélectif de fréquence (678) sensible audit signal de commande pour corriger l'amplitude du signal électrique sur la seconde partie, ainsi les effets de la caractéristique de gain non uniforme du système optique sur le faisceau modulé sont réduits.

2. Dispositif selon la revendication 1, caractérisé en ce que le moyen amplificateur (678) corrige l'amplitude du signal électrique sensiblement seulement sur la seconde partie du spectre de fréquence.

3. Dispositif selon la revendication 1 ou 2, caractérisé en ce que l'information comprend plusieurs signaux de référence d'amplitude prescrite dans la première partie du spectre de fréquence et en ce que le moyen séparateur (682) sépare l'un des signaux de référence occupant un spectre de fréquence relativement étroit comparé à la seconde partie du spectre de fréquence.

4. Dispositif selon l'une des revendications précédentes, caractérisé en ce que l'information est un signal vidéo modulé en fréquence ayant un signal de sous-porteuse de chrominance avec des signaux de synchronisation de sous-porteuse couleur, le moyen séparateur du signal de référence sépare les signaux de synchronisation de sous-porteuse deuleur du reste du signal vidéo, et le moyen de détection d'amplitude compare l'amplitude réelle des signaux de synchronisation de sous-porteuse couleur séparés à l'amplitude de référence prédéterminée.

5. Dispositif selon la revendication 4, caractérisé en ce que le signal vidéo modulé en fréquence comprend un signal de luminance vidéo en prédominance dans la première partie du spectre de fréquence, et le signal de chrominance est de manière prédominante dans la seconde partie du spectre de fréquence, avec de faibles signaux de bande latérale de chrominance de premier ordre dans ladite première partie.

6. Dispositif selon la revendication 5, caractérisé en ce que le signal vidéo modulé en fréquence est enregistré dans des pistes tangentielles sur un disque (5) et la caractéristique de gain non uniforme du système optique est une fonction de l'emplacement radial sur le disque duquel le signal modulé est dirigé au système de restitution du signal.

7. Dispositif selon la revendication 6, caractérisé en ce que le système optique a un moyen pour focaliser un faisceau de rayonnement, qui comprend une lentille d'objectif ayant une puissance de résolution limitée qui diminue la réponse spectrale du système de restitution du signal lorsque les signaux sont reproduits des pistes de rayon diminuant.

8. Procédé de correction de signal pour utilisation dans un dispositif de lecture pour restituer une information enregistrée sur une surface portant une information, laquelle information enregistrée occupe un spectre de fréquence et comprend un signal de référence d'amplitude prescrite dans une première partie du spectre de fréquence, le dispositif de lecture (1) comprenant un système optique (2) pour diriger un faisceau modulé (4') de rayonnement contenant l'information d'un emplacement choisi sur la surface portant l'information à un système de restitution du signal (30) pour produire un signal électrique correspondant, caractérisé en ce que la puissance de résolution du système optique (2) provoque une erreur dans l'amplitude du signal de référence reproduit, et provoque également des erreurs d'amplitude non uniforme dans les signaux reproduits, sur une seconde partie du spectre de fréquence excluant la première partie, l'erreur provoquée dans l'amplitude du signal de référence reproduit ayant une relation prédéterminée par rapport aux erreurs produites dans les amplitudes des signaux reproduits sur la seconde partie, et également caractérisé par les étapes de séparer le signal de référence du reste du signal électrique, comparer l'amplitude du signal de référence à une amplitude de référence prédéterminée et régler l'amplitude du signal électrique sur la seconde partie du spectre de fréquence comme une fonction de la différence en amplitude entre le signal de référence et l'amplitude de référence prédéterminée, ainsi les effets des caractéristiques de gain non uniforme du système optique sur le faisceau modulé sont réduits.

**Patentansprüche**

1. Wiedergabeeinrichtung zur Wiederherstellung von Information, die auf einer informationstragenden Oberfläche aufgezeichnet ist, ein Frequenzspektrum belegt und in einem ersten Teil des Frequenzspektrums ein Bezugssignal mit vorgeschriebener Amplitude enthält, wobei die Wiedergabeeinrichtung (1) ein optisches System (2) enthält, mit dem ein moduliertes Strahlungsbündel (4') mit Information von einem ausgewählten Ort auf der informationstragenden Oberfläche (7) zu einem Signal-Wiederherstellungssystem (30) geleitet wird, um eine entsprechendes elektrisches Signal zu erzeugen, dadurch gekennzeichnet, daß das Auflösungsvermögen des optischen Systems (2) einen Fehler in der Amplitude des wiederhergestellten Bezugssignals erzeugt sowie ungleichförmige Amplitudenfehler in Signalen, die über einem zweiten Teil des Frequenzspektrums wiederhergestellt werden, der außerhalb des ersten Teils liegt, wobei der in der Amplitude des wiederhergestellten Bezugssignals verursachte Fehler eine vorgegebene Beziehung zu den Fehlern aufweist, die in den Amplituden der Signale erzeugt werden, die über dem zweiten Teil wiederhergestellt werden, und weiter charackterisiert durch ein Signalkorrektursystem (32) mit Trennvorrichtungen (682) zum Trennen des Bezugssignals vom Rest des elektrischen Signals, Amplitudendetektionsvorrichtungen (684) zum Vergleichen der Amplitude des Bezugssignals mit einer vorgegebenen Bezugsamplitude und zum Erzeugen eines Steuersignals, das den Unterschied zwischen den Amplituden anzeigt und damit auch die Fehler in den Signalen, die über dem zweiten Teil wiederhergestellt werden, und Verstärkervorrichtungen (678) mit frequenzselektiver variabler Verstärkung, die auf das Steuersignal ansprechen, um die Amplitude des elektrischen Signals über dem zweiten Teil zu korrigieren, wodurch die Auswirkungen der nicht gleichförmigen Verstärkungscharakteristik des optischen Systems auf das modulierte Strahlungsbündel reduziert werden.

2. Einrichtung nach Anspruch 1, bei der die Verstärkervorrichtungen (678) die Amplitude des elektrischen Signals im wesentlichen nur über dem zweiten Teil des Frequenzspektrums korrigieren.

3. Einrichtung nach Anspruch 1 oder 2, bei der die Information eine Vielzahl von Bezugssignalen vorgeschriebener Amplitude im ersten Teil des Frequenzspektrums enthält und die Trennvorrichtung (682) eines der Bezugssignale abtrennt, das ein relativ enges Frequenzspektrum belegt verglichen mit dem zweiten Teil des Frequenzspektrums.

4. Einrichtung nach einem der vorstehenden Ansprüche, bei der die Information ein frequenzmoduliertes Videosignal ist, das einen Chrominanzträger mit periodischen Chrominanzbursts enthält, bei der die Trennvorrichtung für das Bezugssignal die periodischen Chrominanzbursts vom Rest des Videosignals trennt und die Amplitudendetektionsvorrichtung die tatsächliche Amplitude des getrennten Chrominanzbursts mit der vorbestimmten Bezugsamplitude vergleicht.

5. Einrichtung nach Anspruch 4, bei der das frequenzmodulierte Videosignal ein Videoluminanzsignal enthält, das hauptsächlich im ersten Teil des Frequenzspektrums liegt, und das Chrominanzsignal hauptsächlich im zweiten Teil des Frequenzspektrums liegt, wobei die unteren Chrominanzseitenbandsignale erster Ordnung im ersten Teil liegen.

6. Einrichtung nach Anspruch 5, bei der das frequenzmodulierte Videosignal in tangentialen Spuren auf einer Scheibe (5) aufgezeichnet ist und die nicht gleichförmige Verstärkungscharakteristik des optischen Systems eine Funktion des radialen Orts auf der Scheibe ist, von der das modulierte Signal zum Signalwiederherstellungssystem gerichtet wird.

7. Einrichtung nach Anspruch 6, bei der das optische System eine Vorrichtung zur Fokussierung eines Strahlungsbündels aufweist, in der eine Objektivlinse mit begrenztem Auflösungsvermögen enthalten ist, die das spektrale Antwortverhalten des Signalwiederherstellungssystems herabsetzt, wenn die Signale von Spuren mit abnehmendem Radius wiederhergestellt werden.

8. Verfahren zur Signalkorrektur zur Verwendung in einer Wiedergabeeinrichtung zur Wiederherstellung von Information, die auf einer informationstragenden Oberfläche aufgezeichnet ist, ein Frequenzspektrum belegt und ein Bezugssignal mit vorgeschriebener Amplitude in einem ersten Teil des Frequenzspektrums enthält, wobei die Wiedergabeeinrichtung (1) ein optisches System (2) enthält, um ein moduliertes Strahlungsbündel (4), das die Information von einem ausgewählten Ort auf der informationstragenden Oberfläche enthält, zu einem Signal Wiederherstellungssystem (30) zu richten, das ein entsprechendes elektrisches Signal erzeugt, dadurch gekennzeichnet, daß das Auflösungsvermögen des optischen Systems (2) einen Fehler in der Amplitude des wiederhergestellten Bezugssignals erzeugt sowie nicht gleichförmige Amplitudenfehler in Signalen, die über einem zweiten Teil des Frequenzspektrums wiederhergestellt werden, der den ersten Teil ausschließt, wobei der in der Amplitude des wiederhergestellten Bezugssignals erzeugte Fehler eine vorbestimmte Beziehung zu den Fehlern hat, die in den Amplituden der Signale erzeugt werden, die über dem zweiten Teil wiederhergestellt werden, und weiter gekennzeichnet, durch die Verfahrensschritte des Trennens des Bezugssignals vom Rest des elektrischen Signals, des Vergleichens der Amplitude des Bezugssignals mit einer vorbestimmten Bezugsamplitude und des Einstellens der Amplitude des elektrischen Signals über dem zweiten Teil des Frequenzspektrums als Funktion der Amplitudendifferenz zwischen dem Bezugssignal und der vorbestimmten Bezugsamplitude, wodurch die Effekte der nicht gleichförmigen Verstärkungscharakteristiken des optischen Systems auf das modulierte Strahlungsbündel reduziert werden.

FIG. 1

0 035 287

FIG. 2

FIG. 3

FIG. 4

FIG. 5